# FASCICULE DE BREVET EUROPEEN

(11) **EP 1 282 502 B1**
(45) Date de publication et mention de la délivrance du brevet: **30.11.2005**
(21) Numéro de dépôt: 01914930.1
(22) Date de dépôt: 29.03.2001
(51) Int. Cl.: B29C 47/28, B29C 47/90, B29C 69/02

(54) **DISTRIBUTEUR DE MATIERE DANS UNE TETE D'EXTRUSION ET TETE D'EXTRUSION UTILISANT CE DISTRIBUTEUR**
EXTRUSIONSKOPFSCHMELZEVERTEILER UND GEBRAUCH DES VERTEILERS IN EINEM EXTRUSIONSKOPF
MATERIAL DISPENSER IN AN EXTRUSION HEAD AND EXTRUSION HEAD USING SAME

(30) Priorité: 29.03.2000 FR 0003935
(43) Date de publication de la demande: 12.02.2003
(73) Titulaire: Schillaci, Joseph, 1400 Cheseaux-Noréaz (CH)
(72) Inventeur: SCHILLACI, Joseph, CH-1405 Pomy (CH); ROBERT, Roger, CH-1055 Froideville (CH)
(86) Numéro de dépôt international: PCT/CH2001/000194
(87) Numéro de publication internationale: WO 2001/072498

(56) Documents cités:
- EP-A- 0 499 025
- BE-A- 707 639
- CH-A- 687 305
- GB-A- 2 134 842
- US-A- 1 336 669
- US-A- 3 355 769
- US-A- 4 499 041
- US-A- 4 773 448

## Description

### Domaine technique

La présente invention concerne une tête d'extrusion pour une ligne d'extrusion de matière synthétique pour la fabrication de produits allongés, tels que par exemple des câbles électriques ou optiques, des tubes, notamment des tubes d'arrosage ou similaires ou des films tubulaires, cette tête d'extrusion comportant au moins un module d'alimentation de la matière synthétique à extruder, ledit module étant pourvu d'un canal d'arrivée de cette matière synthétique à extruder, d'un canal de distribution et d'une buse de sortie.

### Art antérieur

Une tête d'extrusion peut se définir comme un élément statique qui permet de transformer une masse malléable de matière synthétique dite matière plastique sous pression en une forme continue sans pression par passage au travers d'une filière. Cet extrudât est ensuite rapidement refroidi pour en conserver ses formes et ses dimensions. Les principales parties sont une zone de raccordement à un générateur de pression pour l'introduction de la matière synthétique dans la tête d'extrusion, une zone de répartition de la matière au sein de la tête d'extrusion et une zone de formage de l'objet extrudé.

Le brevet suisse CH 687 305 décrit une tête d'extrusion tout à fait classique comportant une entrée centrale de la matière synthétique qui débouche sur un canal de distribution composé de deux branches semi-circulaires qui assurent la circulation de cette matière sous la forme de deux flux opposés qui se rejoignent à l'opposé de l'entrée. Ce mode de fonctionnement engendre des défauts d'homogénéité au niveau de la jonction.

Le brevet US-A-3 355 769 a pour objet un procédé et un appareil pour produire des tubes sans joint dans lequel on force la matière thermoplastique à couler en suivant la périphérie d'une chambre au centre de laquelle est disposé un organe de mise en forme.

La publication BE 707 639 concerne une filière d'extrusion pourvue de chambres annulaires pour extruder un article tubulaire.

La demande de brevet GB-A-2 134 842 peut être citée comme exemple de document montrant l'utilisation d'un dispositif de mise en forme.

Le brevet US-A-4 773 448 concerne la fabrication simultanée d'un tube en plastique résistant au gel et de sa coquille extérieure dure.

Le brevet US 4'499'041 peut être cité comme exemple de document montrant l'utilisation d'une tête d'extrusion pour la fabrication de tubes multicouches.

La publication européenne EP 0 499 025 A1 décrit un outil d'extrusion pour la fabrication de tubes qui comporte un noyau central rotatif cylindrique. Ce dispositif de forme déterminée ne permet de réaliser qu'un seul calibre de tuyau. Sa construction est complexe et la répartition de la matière synthétique à extruder s'effectue longitudinalement, ce qui impose une longueur encombrante à la tête d'extrusion. En outre la réalisation de plusieurs couches de matières différentes, éventuellement portées à des températures différentes, est totalement impossible.

Les lignes d'extrusion actuellement utilisées comportent toutes une tête d'extrusion formée notamment d'une filière et d'un guide-fil. Lorsque la ligne est utilisée pour extruder une matière synthétique autour d'un conducteur, en particulier d'un conducteur électrique ou d'une fibre optique, la tête d'extrusion a pour fonctions de positionner le conducteur, de répartir la matière autour du conducteur et de former l'extérieur de la couche ou des couches superposées de matière synthétique constituant la gaine du fil ou du câble ainsi réalisé.

Afin de remplir ces différentes fonctions, les têtes d'extrusion sont réalisées de façon spécifique pour chaque application. Le nombre de couches à extruder, le diamètre du conducteur, le diamètre et les caractéristiques physico-chimiques de chacune des couches influencent la forme et les dimensions de la tête d'extrusion. De plus, la réalisation d'une tête d'extrusion nécessite un usinage complexe et coûteux.

En effet, en fonction des dimensions de l'objet à extruder, du nombre de couches de matériaux synthétiques différents, du ou des matériaux constitutifs de l'extrudât, du sens de fonctionnement (de gauche à droite ou vice versa) ainsi que de la position des constituants de la ligne d'extrusion (extrudeuse en position verticale, à gauche ou à droite de la tête d'extrusion ou également en ligne), la tête d'extrusion sera construite de manière différente.

Malgré cette diversité apparente, il existe au niveau de la répartition de la matière au sein de la tête d'extrusion principalement trois représentations décrites ci-après.

Toutes les têtes d'extrusion actuelles confèrent à la structure de la matière extrudée une orientation des chaînes moléculaires dans le sens de l'écoulement, soit dans le sens longitudinal par rapport à la forme extrudée. Tout allongement supplémentaire est limité dans des proportions relativement faibles.

### Description de l'invention

La présente invention se propose de pallier les inconvénients des têtes d'extrusion de l'art antérieur en réalisant une tête d'extrusion modulaire, pour câbles, tubes et films, permettant d'utiliser des modules identiques pour une large gamme d'applications. De plus, chacun des modules est simple à réaliser et assure un écoulement sous pression de matières synthétiques à l'état malléable, réalisé avec des formes usinées dans des éléments métalliques, ci-après dénommés modules, en vue de l'obtention d'une disposition moléculaire nouvelle dans le domaine de l'extrusion d'éléments cylindriques creux, pleins ou de films.

Cette tête d'extrusion est destinée à la fabrication en continu d'éléments tubulaires cylindriques en matière synthétique, comme des tubes, tels que des tuyaux d'arrosage, comme des isolants diélectriques pour des câbles électriques ou des câbles optiques et comme des films tubulaires obtenus généralement par une technique appelée extrusion-soufflage.

Ces buts sont atteints par une tête d'extrusion telle que définie en préambule et caractérisée en ce que ledit canal d'arrivée de cette matière synthétique à extruder débouche tangentiellement dans ledit canal de distribution, en ce que ledit canal de distribution est circulaire, a une section transversale progressivement décroissante et conduit la totalité du flux de ladite matière synthétique à extruder dans une même direction vers une zone centrale de laminage qui débouche sur une zone de recentrage orientant ladite matière synthétique à extruder vers la buse de sortie.

Selon un mode de réalisation préféré, la tête d'extrusion comporte au moins un dispositif de mise en forme de la matière à extruder, et ce dispositif de mise en forme est indépendant du module d'alimentation.

De façon préférentielle, la tête d'extrusion peut comporter plusieurs modules d'alimentation identiques et juxtaposés d'amont en aval dans le sens de l'extrusion.

Selon un mode de réalisation particulier, chaque module est constitué d'un corps composé de deux plaques juxtaposées qui définissent le canal d'arrivée, le canal de distribution, la zone centrale de laminage, la zone de recentrage et la buse de sortie par des usinages effectués sur leur face intérieure.

Chaque module peut comporter un élément de chauffage indépendant.

Selon une forme de réalisation avantageuse, le dispositif de mise en forme est placé en aval des modules d'alimentation.

Ce dispositif de mise en forme comporte de préférence au moins une paire de galets de mise en forme disposés sur un support pivotant autour d'un axe colinéaire à la direction d'extrusion. Les galets de mise en forme sont disposés de façon symétrique par rapport à l'axe colinéaire à la direction d'extrusion.

Les galets de mise en forme peuvent être symétriques par rapport à un axe perpendiculaire à l'axe colinéaire à la direction d'extrusion et sont agencés pour pivoter autour de cet axe.

D'une manière préférentielle, les galets sont entraînés en rotation au moyen d'au moins un moteur.

La distance entre les galets d'une même paire de galets est de préférence réglable.

### Brève description des dessins

La présente invention et ses avantages seront mieux compris en référence à différents modes de réalisation de l'invention et aux dessins annexés dans lesquels :
- les figures 1A et 1 B représentent le développé du parcours de la matière autour d'une tête de forme conique ou cylindrique,
- la figure 1C représente l'écoulement de la matière dans une tête à éléments plats,
- les figures 2A et 2B représentent un outil classique de compression et de semi-compression,
- la figure 2C représente un outil de façonnage de tubes,
- la figure 3 est une vue schématique partiellement en coupe d'une tête d'extrusion selon la présente invention,
- la figure 4 est une vue de face d'un module de la tête d'extrusion de la figure 3 ;
- la figure 5 est une vue de profil d'une partie de la tête d'extrusion de la figure 3,
- les figures 6 et 7 sont des vues en perspective de deux modes de réalisation d'un détail de la tête d'extrusion selon la présente invention,
- les figures 8A et 8B représentent une vue simplifiée et schématique illustrant le fonctionnement d'un module d'alimentation selon deux variantes différentes,
- la figure 9 représente un chevauchement de la matière entrant et de la matière ayant déjà parcouru une rotation,
- la figure 10 représente la répartition de la pression d'entrée autour de la zone de laminage,
- les figures 11A, 11 B, 11 C et 11D représentent les différentes formes de la zone de laminage,
- la figure 12 représente le flux de la matière dans le canal de distribution de la tête d'extrusion selon l'invention,
- la figure 13 représente le comportement de la matière dans un écoulement libre,
- les figures 14A et 14B représentent l'orientation des chaînes et le changement d'état de la matière,
- les figures 15A, 15B et 15C représentent des variantes non exhaustives des formes de passage pour l'écoulement de la matière,
- la figure 16 représente une chaîne moléculaire suivant une déformation hélicoïdale,
- la figure 17 représente et schématise la forme en éventail prise par les chaînes moléculaires,
- la figure 18 représente un exemple d'application modulaire d'une zone d'étirage libre,
- la figure 19 est une vue en coupe du module de la figure 18,
- la figure 20 illustre une tête d'extrusion comportant trois modules similaires,
- la figure 21 représente l'orientation de canaux d'entrée de matière dans une tête selon la figure 20, et
- la figure 22 illustre une tête d'extrusion comportant trois modules différents.

### Meilleures manières de réaliser l'invention

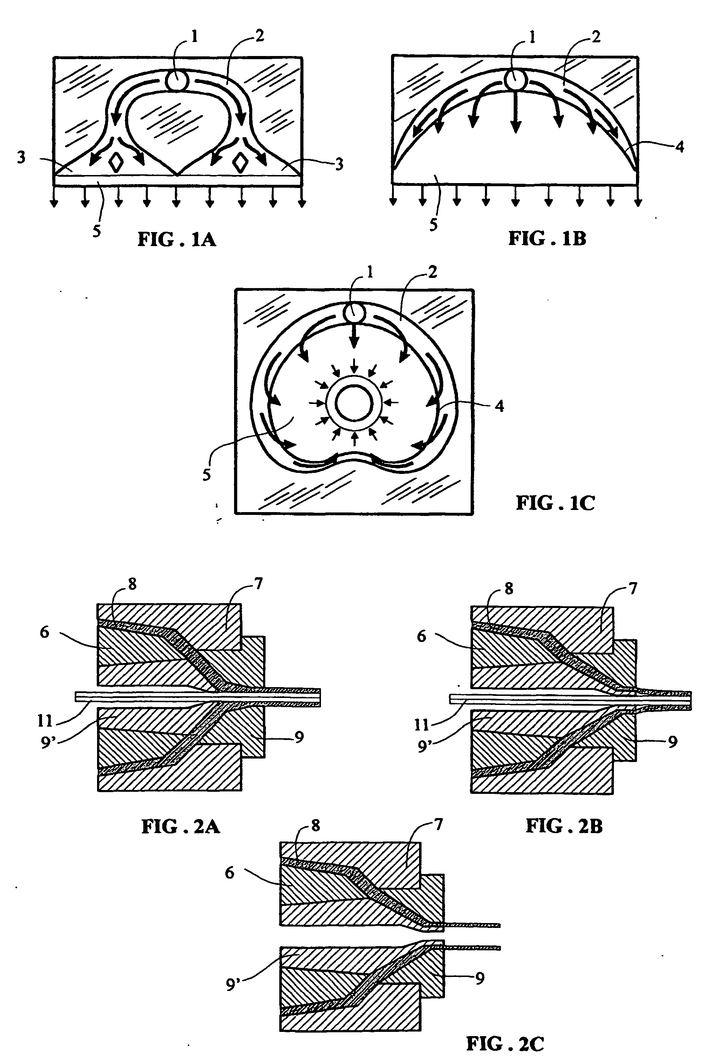

Les figures 1A et 1B représentent le développé redressé du parcours de la matière synthétique dans une tête d'extrusion ayant un répartiteur de la matière à extruder de forme conique ou cylindrique selon l'art antérieur. La figure 1C représente l'écoulement de la matière dans un dispositif répartiteur constitué d'éléments plats.

Dans la figure 1A, la matière entre dans la tête d'extrusion par un orifice 1, se divise dans un canal principal 2, puis encore dans des canaux 3 pour remplir entièrement la section circulaire du dispositif répartiteur de matière avant de la distribuer sur les outils de formage.

Dans les figures 1B et 1C, les mêmes principes sont mis en oeuvre: la matière synthétique entre dans la tête d'extrusion par l'orifice 1, se divise dans le canal principal 2 pour être cisaillée au niveau de la génératrice 4 et pour permettre le remplissage complet de la zone d'écoulement 5 vers les outils de formage.

Ces principes connus utilisés dans les têtes d'extrusion de l'art antérieur aboutissent à une division des flux de matière synthétique à l'intérieur de la tâte d'extrusion, ces flux de matière devant se ressouder à la sortie, ce qui aboutit immanquablement à une ligne de jonction longitudinale de la matière qui est fragilisée le long de cette ligne.

En ce qui concerne les outils de mise en forme, ils se répartissent principalement en deux catégories, à savoir les outils de compression et semi-compression (dénomination caractérisant l'angle donné au cône final situé dans la filière). Plus l'angle augmente, plus l'effet de "compression" est important comme le montrent les figures 2A et 2B, et les outils de façonnage de tube représentés par les figures 2B et 2C. Un répartiteur 6 ainsi que le corps 7 de la tête d'extrusion orientent et répartissent le flux de matière synthétique 8 en direction d'une filière 9 et d'un guide fil 9'. Le guide fil 9' fait office d'organe de centrage d'un conducteur 11 et oriente la matière sur sa face externe.

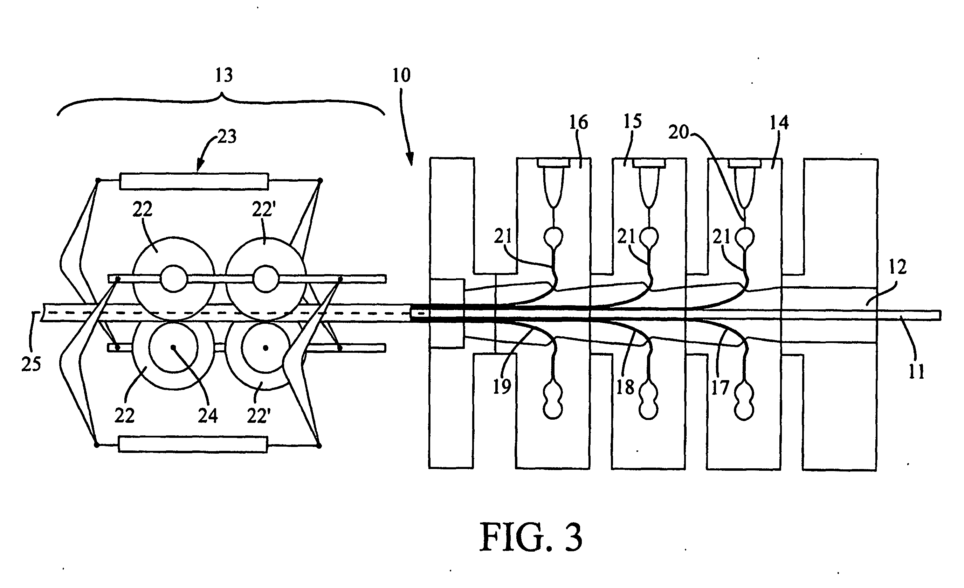

En référence aux figures 3 à 7, la tête d'extrusion 10 selon la présente invention est illustrée dans un mode de réalisation dans lequel elle est utilisée pour extruder de la matière synthétique autour d'un conducteur 11, tel que notamment un conducteur électrique ou une fibre optique, pour former un câble. Cette tête 10 se compose d'au moins un module 14, 15, 16 et est associée à un dispositif de mise en forme 13 complémentaire et facultatif, illustré en détail par les figures 3, 5, 6 et 7. Le nombre de modules dépend du nombre de couches de matières à extruder.

Dans l'exemple représenté par la figure 3, la tête est utilisée pour extruder trois couches superposées 17, 18, 19 de matière synthétique et comporte donc trois modules d'alimentation 14, 15, 16. Chacun des modules comporte une ouverture centrale 12 notamment pour le passage d'un conducteur électrique ou optique 11 autour duquel la matière synthétique est extrudée en couches superposées. La nature de la matière synthétique extrudée par chaque module dépend bien évidemment des caractéristiques que le fabricant du câble souhaite obtenir.

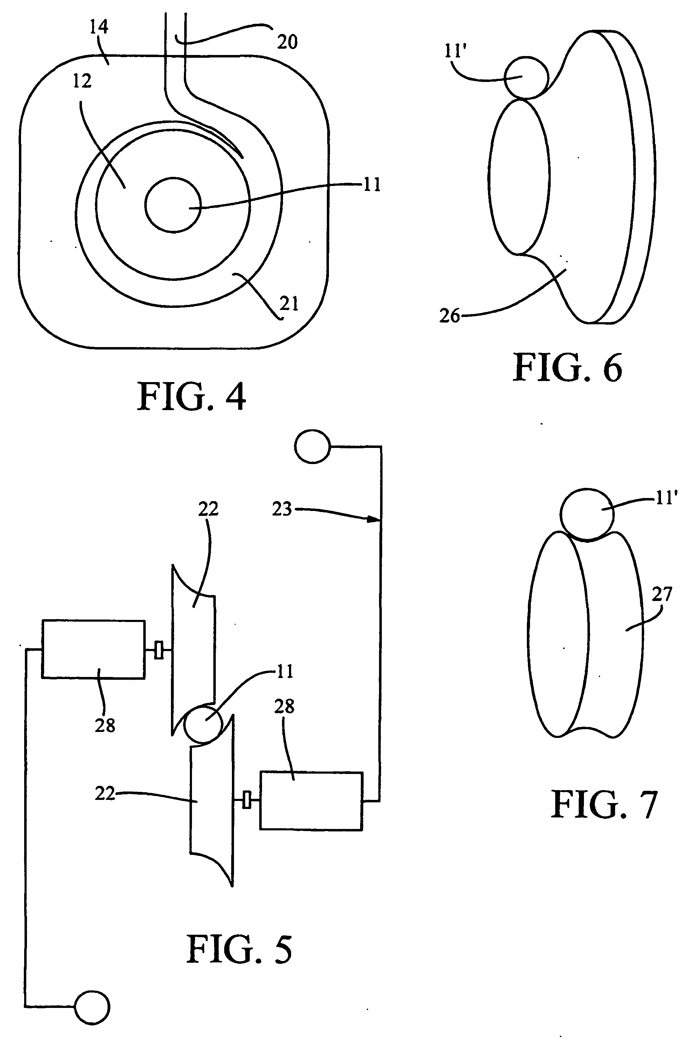

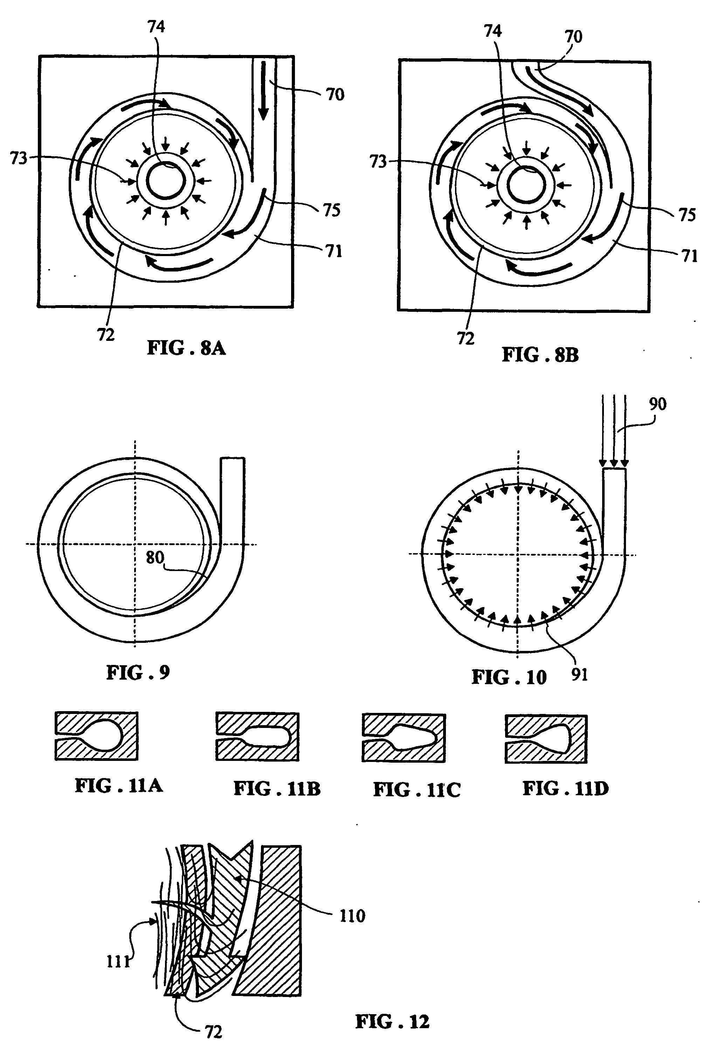

Chaque module comporte un canal d'arrivée 20 qui se prolonge par un canal de distribution 21 de la matière synthétique, représenté en détail par la figure 4. Ce canal, sensiblement circulaire est disposé autour de l'alésage de passage du conducteur 11 et est raccordé tangentiellement au canal d'arrivée. Ce canal a une section variable le long de la circonférence. Cette section est déterminée de telle manière que l'épaisseur de la matière à extruder soit uniforme sur le câble fini. Le canal de distribution 21 ouvert sur une zone centrale de laminage 12 débouchant sur une zone de recentrage de la matière synthétique. Cette zone de laminage 12 est caractérisée par une réduction de la section de passage et confère à la matière une meilleure homogénéité en contraignant les éventuelles particules mal fondues à circuler en amont de cette zone jusqu'à l'obtention de la structure appropriée. Elle est matérialisée, avantageusement par une zone circulaire de préférence pourvue d'angles arrondis et sera illustrée en détail par les figures 8 et suivantes.

Dans le mode de réalisation illustré par la figure 3, le conducteur est introduit par le côté droit et ressort du côté gauche. La matière synthétique à extruder destinée à former la première couche en contact avec le conducteur est introduite dans le module 14 le plus en amont. Grâce à l'arrivée tangentielle de la matière synthétique et à la section progressivement décroissante du canal 21 de distribution, la matière synthétique se répartit autour du conducteur 11 de façon à présenter une épaisseur sensiblement uniforme.

La deuxième couche 18 de matière à extruder est introduite dans le module 15 directement adjacent au module décrit précédemment, situé en aval de ce dernier.

La forme de ce module est identique à celle du module précédent de sorte que la matière à extruder est disposée autour du câble constitué par le conducteur 11 déjà recouvert de la première matière extrudée par le premier module 14. Il en va de même pour le troisième module 16 qui permet de déposer la troisième couche 19 de matière synthétique.

Chacun des modules peut avoir des moyens de chauffage indépendants (non représentés), ce qui permet de régler la température de façon qu'elle corresponde à la température souhaitée pour la matière spécifique à extruder. Ces moyens de chauffage peuvent être des colliers de chauffe ou des crayons de chauffe notamment. La tête d'extrusion peut également être régulée au moyen d'un thermostat, en fonction de l'application.

L'introduction de matière synthétique dans chaque module se fait à une pression déterminée. Cette pression peut être réglée indépendamment pour chaque module, d'une façon bien connue de l'homme du métier.

Il est également possible d'utiliser des modules ayant des diamètres de canaux d'arrivée différents, en fonction de l'épaisseur de la couche à extruder.

Cette épaisseur dépend essentiellement de la matière utilisée, de la température du module, de la pression d'introduction dans le module, du diamètre du canal et de paramètres liés à la ligne d'extrusion, tels que la vitesse et le débit de la boudineuse principale, la vitesse et le débit d'extrudeuses additionnelles et la vitesse de traction et de déroulement du conducteur.

Les figures 3, 5, 6 et 7 illustrent différents modes de réalisation du dispositif 13 de mise en forme, facultatif, basé sur le principe du gyroscope.

Celui-ci comprend essentiellement au moins une paire de galets 22 de mise en forme et un support 23. Dans l'exemple illustré par les figures 3 et 5, le dispositif comporte deux paires de galets 22, 22', montés de façon à pouvoir pivoter sur le support 23. Les galets de mise en forme peuvent tourner autour d'un axe central 24, perpendiculaire à l'axe longitudinal 25 du câble extrudé et sont symétriques autour de cet axe central.

L'ensemble du support 23 peut également tourner autour d'un axe longitudinal colinéaire à l'axe longitudinal 25 du conducteur.

Les figures 6 et 7 illustrent deux variantes de galets 26, 27 qui peuvent être utilisés pour la mise en forme de la matière synthétique extrudée. Le profil de ces galets peut être choisi en fonction du diamètre du câble fini et des matériaux extrudés notamment.

Chaque galet est entraîné en rotation par un moteur 28 ou un autre dispositif approprié, indépendant ou commandant par exemple une paire de galets. La vitesse de rotation est asservie au moyen d'une commande électronique qui permet une régulation précise des paramètres des moteurs. De plus, la distance entre deux galets d'une même paire peut être réglable. La distance entre les galets de chaque paire peut être réglée de façon indépendante. Par exemple, plus la paire de galets est éloignée des modules d'alimentation plus les galets sont serrés. De cette façon, avec un même dispositif de mise en forme, une large gamme de diamètres de câbles ou de tubes peut être mise en oeuvre.

L'ensemble du support 23 est mis en rotation au moyen d'un moteur ou d'un autre dispositif d'entraînement indépendant (non représenté), de sorte que par rapport au conducteur, les galets décrivent un mouvement hélicoïdal. Ce mouvement, allié à la forme des galets assure une mise en forme correcte du conducteur.

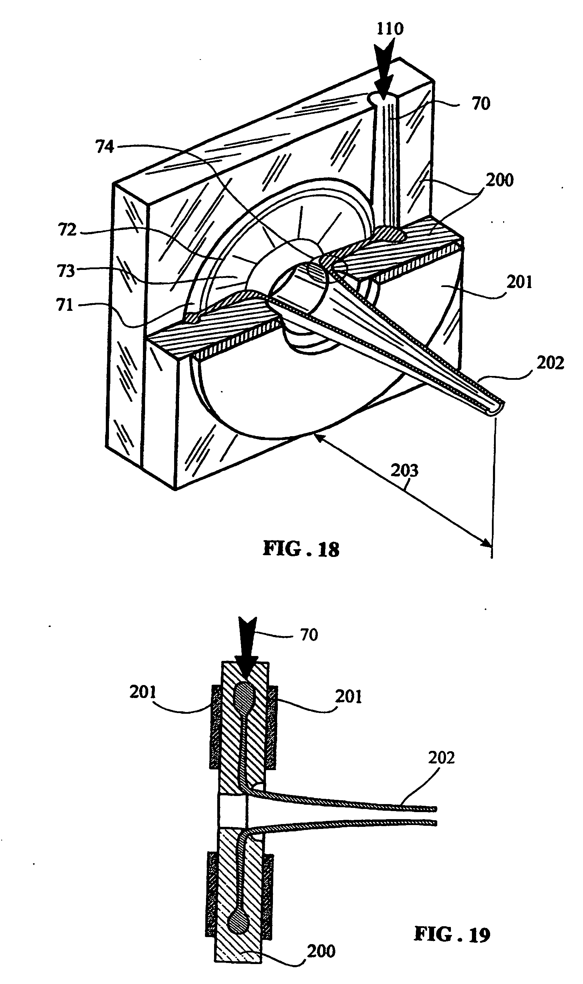

La présente invention se différencie des têtes d'extrusion de l'art antérieur par les points décrits ci-après, en se référant au dessin annexé, notamment aux figures 8A et 8B qui sont deux vues simplifiées et schématiques illustrant le fonctionnement du module d'alimentation. Ce module d'alimentation comporte un canal d'arrivée de la matière synthétique 70 qui est tangentiel à un canal de distribution 71, une zone de laminage 72, une zone de recentrage 73, une buse de sortie 74 ainsi que, dans certaines réalisations, une zone d'étirage libre (voir figure 18 références 202 et 203).

La figure 8A représente un canal d'arrivée 70 déporté et la figure 8B un canal d'arrivée 70 centré.

La forme du canal d'arrivée 70 tangentiel, de préférence cylindrique, permet le raccordement de la tête d'extrusion à l'extrudeuse. Sa position par rapport au module peut être soit décentrée, comme cela est illustré par la figure 8B, soit centrée, comme cela est illustré par la figure 8A. Elle peut également occuper toute autre position intermédiaire entre ces représentations. Son sens de rotation peut être soit horaire, soit anti-horaire. Sa position peut varier sur 360°.

Le canal de distribution 71 permet de répartir la matière autour de la zone de laminage circulaire de façon à obtenir une répartition homogène de la matière. Par sa forme, il doit autoriser un chevauchement 80 entre la matière entrant et la matière ayant déjà effectué une rotation, comme cela est illustré par la figure 9. Sa forme doit permettre de répartir au mieux la pression d'entrée 90 autour de la zone de laminage, sous la forme d'une pression 91 illustrée par la figure 10. Elle est donc de préférence variable en section et peut éventuellement être modifiée. Elle peut se présenter sous une forme circulaire (voir figure 11A), oblongue (voir figure 11B), triangulaire (voir figures 11C et 11D) ou autres.

La zone de laminage 72 est caractérisée par une réduction de la section qui confère à la matière une réorganisation des chaînes moléculaires très importante.

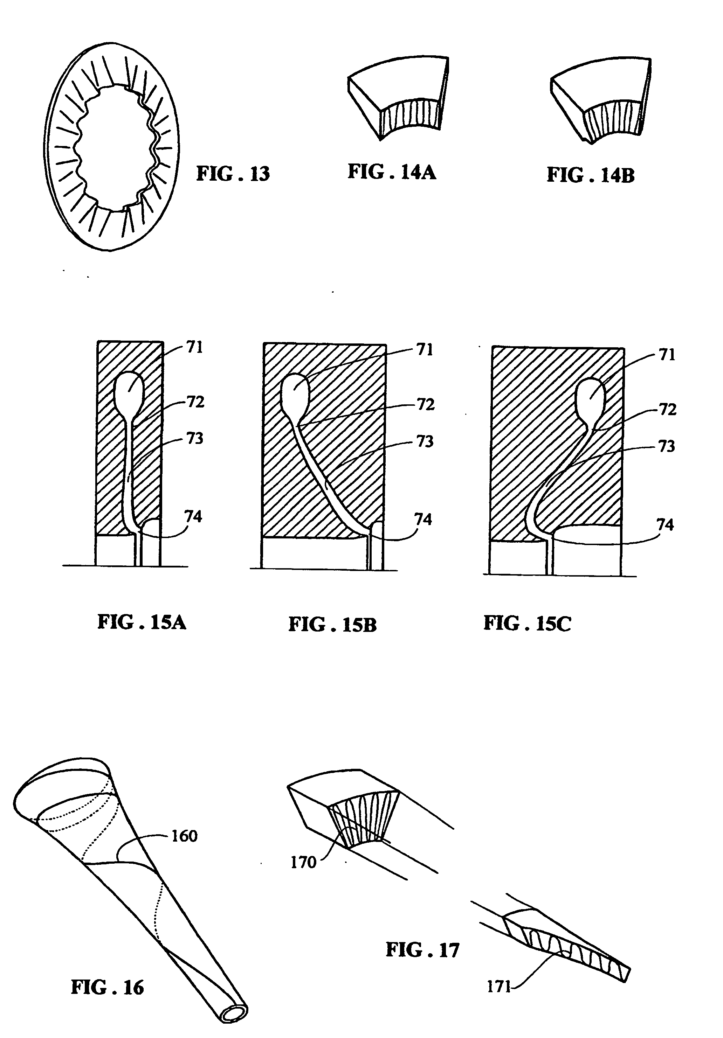

Sur la figure 12 est matérialisé le flux de matière 110 dans le canal de distribution. Le passage au travers de la section de laminage 72 entraîne l'orientation des chaînes 111. La figure 13 représente schématiquement en trois dimensions ce phénomène. La zone de laminage permet également une meilleure homogénéité de la matière, comme cela a été expliqué précédemment.

La zone de recentrage 73 découle principalement des contraintes physiques dues aux formes géométriques reliant la zone de laminage à la buse de sortie. Elle permet d'orienter la matière vers le centre du module et doit interférer un minimum sur l'orientation des chaînes moléculaires.

La figure 13 montre le comportement de la matière dans un écoulement libre. La figure 14A représente théoriquement l'orientation des chaînes si l'écoulement était parfait c'est-à-dire sans frottement. La figure 14B représente de façon plus réaliste le changement que subit la matière dans cette zone.

Pour limiter les effets indésirables sur la modification de l'organisation de la structure de la matière, il faut limiter l'accélération, voire la supprimer en dimensionnant au plus près les formes. La longueur de cette zone doit être limitée et la surface doit être rendue la plus lisse possible par un traitement approprié. Sa forme n'est pas soumise à des contraintes particulières et peut correspondre aux représentations selon les figures 15A, 15B, 15C ou toutes les variantes issues de ces formes.

La section de la buse de sortie 74, correspond à la zone où la matière sort du module. Elle sera avantageusement délimitée par une section légèrement restreinte par rapport à la section située légèrement en amont. Elle sera également de préférence réalisée avec des angles vifs pour permettre un décrochement de la matière d'une façon plus franche et plus répétitive.

La zone d'étirage libre représentée par la figure 18, sous les références 202 et 203 est issue de la mise en forme de la matière par les points énoncés préalablement. Cette zone, caractérisée par un coefficient d'allongement communément nommé DDR, pratiquement inexistant sur les têtes actuelles, revêt dans cette invention un caractère novateur très important car elle permet avec une même configuration de fabriquer une multitude de produits.

Avec les spécificités de cette invention, il est possible de faire varier dans des proportions très importantes la section circulaire de la matière sortant du module par la buse de sortie. Les chaînes moléculaires suivent alors une déformation hélicoïdale telle que représentée par la figure 16 sous la référence 160. De ce fait, la section garde sa forme cylindrique creuse et seuls les diamètres intérieur et extérieur varient.

La figure 17 schématise la forme en éventail 170 qu'ont prises les chaînes moléculaires en passant au travers de la zone de recentrage. Lors de son allongement, l'extrudât se tend par rapport aux liaisons moléculaires les plus résistantes c'est-à-dire dans le sens des lignes de chaînes 171. La section obtenue sera fonction du débit de matière sortant de la buse.

Sur les figures 18 et 19 est représenté un exemple de réalisation d'un module de la tête d'extrusion selon l'invention. Ce module est composé d'un corps en deux parties 200 sous forme de plaques juxtaposées, avec un canal d'entrée de matière synthétique 110. Dans les plaques 200 constituant le corps, sont usinés sur les faces intérieures des plaques ledit canal d'entrée 70, le canal de distribution 71, la zone de laminage 72, la zone de recentrage 73 et la buse de sortie 74.

Le module sera muni éventuellement des éléments de chauffage 201. La référence 202 représente l'extrudât en coupe. La référence 203 symbolise la zone d'étirage où l'extrudât se déforme librement.

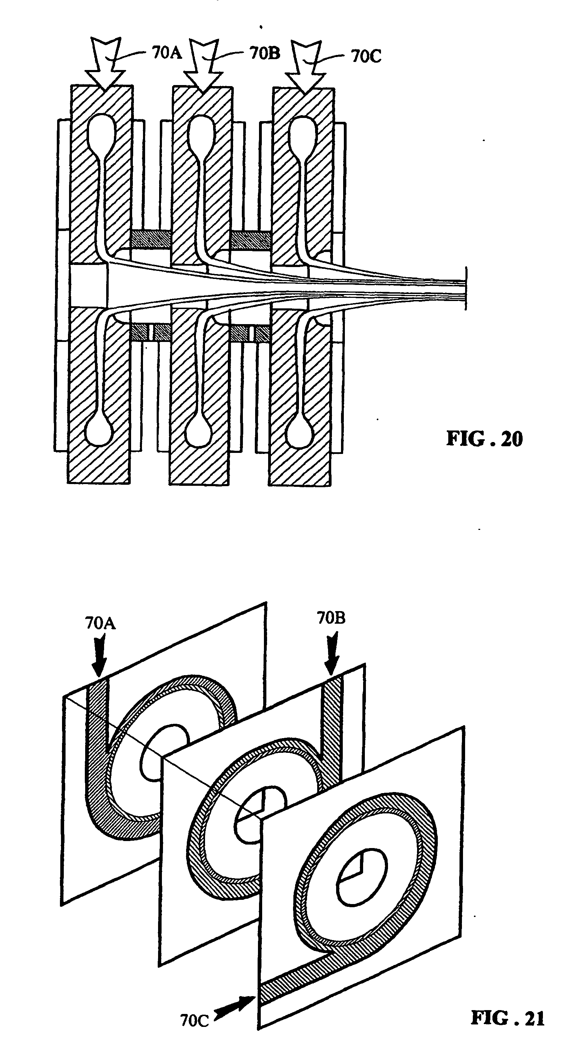

La figure 20 représente une tête d'extrusion comportant trois modules similaires, sans dispositif de mise en forme. La mise en forme est faite uniquement grâce à la distribution de la matière dans les modules.

La figure 21 représente l'orientation possible des canaux d'entrée de matière dans les modules.

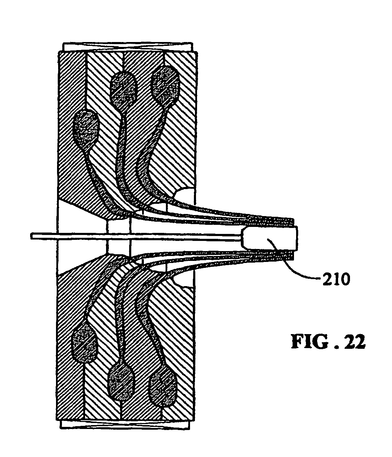

La figure 22 est similaire à la figure 20. Les modules sont toutefois légèrement différents les uns des autres de façon à obtenir un ensemble plus compact. Dans l'exemple illustré, la tête d'extrusion est utilisée pour extruder un tube.

Selon le produit extrudé et son application, la distance entre les modules d'alimentation et le dispositif de mise en forme peut être variée.

Le nombre de galets du dispositif de mise en forme peut être variable et les formes des galets peuvent être différentes. La matière des galets peut être quelconque, ainsi que le revêtement et le traitement de surface.

Selon l'application spécifique, il est possible d'utiliser plus de deux paires de galets, bien que seul un mode de réalisation ayant deux paires de galets ait été illustré. Il est également possible de prévoir un refroidissement des galets, ce qui peut augmenter la vitesse d'extrusion du câble. Chaque paire de galets a été représentée dans un même plan. Il est également possible de prévoir plusieurs dispositifs de mise en forme, disposés dans des plans différents, par exemple perpendiculaires entre eux ou un dispositif de mise en forme unique, comportant des paires de galets répartis sur la périphérie du conducteur, de façon non coplanaire.

La présente invention offre de nombreux avantages par rapport aux têtes d'extrusion de l'art antérieur. Le fait de séparer les fonctions d'alimentation en matière et de mise en forme permet d'optimiser de façon indépendante les éléments qui réalisent ces fonctions.

En outre, la forme de réalisation par modules indépendants permet une grande souplesse, puisqu'il suffit d'assembler le nombre de modules nécessaire, correspondant au nombre de couches à extruder pour obtenir la tête d'extrusion souhaitée.

De plus, chacun de ces modules étant prévu pour alimenter la tête avec une seule couche de matière, ils sont extrêmement simples à réaliser.

En ce qui concerne le dispositif de mise en forme, les éléments utilisés sont également simples à réaliser et peuvent être très facilement changés si l'application le nécessite.

La tête d'extrusion selon l'invention a été illustrée pour l'extrusion d'un câble comportant un conducteur central. La même tête pourrait également être utilisée pour un câble contenant plusieurs éléments centraux, pour un tube creux, pour du bourrage entre plusieurs conducteurs, du gainage de plusieurs conducteurs isolés ou pour la réalisation de films, etc.

Cette tête pourrait également être utilisée dans l'industrie alimentaire pour des produits alimentaires extrudés.

Les galets peuvent également être utilisés pour donner une forme particulière au produit, par exemple une forme hélicoïdale dont la section transversale est une ellipse.

Ces galets peuvent également comporter une inscription en creux ou en relief ou une encre, permettant de reporter l'inscription sur le produit.

L'un ou plusieurs modules peuvent comporter deux, voire plusieurs canaux d'alimentation, ce qui permet de réaliser une couche comportant des stries colorées ou une coloration partielle. Il est également possible de réaliser un changement rapide de matière.

Il est à noter que les modules d'alimentation et le dispositif de mise en forme peuvent être séparés ou intégrés dans un même carter.

La présente invention se différencie largement des dispositifs de l'art antérieur par le fait que le flux de matière n'est pas divisé par le passage au travers de trous ou de cavités. Cette division de la matière à cet état de l'extrusion n'est pas acceptable pour toutes les matières synthétiques et ne permet pas un étirage libre comme sur la présente invention.

Dans la présente invention, l'élément de mise en forme, dénommé gyroscope, contrairement au document GB 2'134'842 n'utilise qu'un axe de révolution principal correspondant à l'axe de la ligne d'extrusion. L'effet gyroscopique engendré par la rotation des galets sur et autour de l'extrudât est en partie compensé par des contrepoids et par une vitesse de rotation appropriée pour permettre un pressage de mise en forme optimal.

La mise en forme de la matière à extruder se fait directement depuis le ou les modules d'alimentation.

Grâce à la tête d'extrusion selon la présente invention, l'allongement de l'extrudât s'effectue de façon homogène en conservant sa forme géométrique dans des proportions plus importantes que dans les têtes d'extrusion selon l'art antérieur. L'orientation des lignes de chaînes moléculaires permet un auto-bourrage autour d'éléments sans axe de révolution rectiligne. Le positionnement de modules permet de réaliser des produits ayant un comportement mécanique différent de ceux existant actuellement. En effet, les tubes à épaisseurs et matériaux identiques sont plus résistants à la pression et au vide et acceptent des rayons de courbure plus faibles sans déformation de la forme cylindrique.

## Revendications

1. Tête d'extrusion pour une ligne d'extrusion de matière synthétique pour la fabrication de produits allongés, tels que par exemple des câbles électriques ou optiques, des tubes, notamment des tubes d'arrosage ou similaires ou des films tubulaires, cette tête d'extrusion comportant au moins un module d'alimentation (14, 15, 16) de la matière synthétique à extruder, ledit module étant pourvu d'un canal d'arrivée (20, 70, 110) de cette matière synthétique à extruder, d'un canal de distribution (21, 71) et d'une buse de sortie (74), **caractérisée en ce que** ledit canal d'arrivée (20, 70, 110) de cette matière synthétique à extruder débouche tangentiellement dans ledit canal de distribution (21, 71), **en ce que** ledit canal de distribution (21, 71) est circulaire, a une section transversale progressivement décroissante et conduit la totalité du flux de ladite matière synthétique à extruder dans une même direction vers une zone centrale de laminage (72) qui débouche sur une zone de recentrage (73) orientant ladite matière synthétique à extruder vers la buse de sortie (74).

2. Tête d'extrusion selon la revendication 1, **caractérisée en ce qu'**elle comporte au moins un dispositif de mise en forme (13) de la matière à extruder, et **en ce que** ce dispositif de mise en forme est indépendant du module d'alimentation (14).

3. Tête d'extrusion selon la revendication 1, **caractérisée en ce qu'**elle comporte plusieurs modules d'alimentation (14, 15, 16) identiques et juxtaposés d'amont en aval dans le sens de l'extrusion.

4. Tête d'extrusion selon la revendication 1, **caractérisée en ce que** chaque module est constitué d'un corps composé de deux plaques (200) juxtaposées qui définissent le canal d'arrivée (110), le canal de distribution (71), la zone centrale de laminage (72), la zone de recentrage (73) et la buse de sortie (74) par des usinages effectués sur leur face intérieure.

5. Tête d'extrusion selon la revendication 1, **caractérisée en ce que** chaque module comporte un élément de chauffage indépendant (201).

6. Tête d'extrusion selon la revendication 2, **caractérisée en ce que** le dispositif de mise en forme (13) est disposé en aval des modules d'alimentation (14, 15, 16).

7. Tête d'extrusion selon la revendication 2, **caractérisée en ce que** le dispositif de mise en forme (13) comporte au moins une paire de galets de mise en forme (22, 22') disposés sur un support (23) pivotant autour d'un axe (25) colinéaire à la direction d'extrusion.

8. Tête d'extrusion selon la revendication 7, **caractérisée en ce que** les galets de mise en forme (22, 22') sont disposés de façon symétrique par rapport à l'axe (25) colinéaire à la direction d'extrusion.

9. Tête d'extrusion selon la revendication 7, **caractérisée en ce que** les galets (22, 22') de mise en forme sont symétriques par rapport à un axe (24) perpendiculaire à l'axe (25) colinéaire à la direction d'extrusion et sont agencés pour pivoter autour de cet axe (24).

10. Tête d'extrusion selon la revendication 7, **caractérisée en ce que** les galets (22, 22') sont entraînés en rotation au moyen d'au moins un moteur.

11. Tête d'extrusion selon la revendication 7, **caractérisée en ce que** la distance entre les galets (22, 22') d'une même paire de galets est réglable.

## Patentansprüche

1. Extruderkopf für eine Kunststoff-Extrusionsanlage zur Herstellung von länglichen Erzeugnissen, wie zum Beispiel elektrischen oder optischen Kabeln, Schläuchen, vor allem von Beregnungs- oder ähnlichen Schläuchen oder Schlauchfolien, wobei dieser Extruderkopf mindestens eine Einheit (14, 15, 16) zur Versorgung mit dem zu extrudierenden Kunststoff aufweist, wobei diese Einheit mit einem Zuführungskanal (20, 70, 110) für den zu extrudierenden Kunststoff, einem Verteilerkanal (21, 71) und einer Austrittsdüse (74) ausgestattet ist, **dadurch gekennzeichnet, dass** dieser Zuführungskanal (20, 70, 110) für den zu extrudierenden Kunststoff tangential in den Verteilerkanal (21, 71) mündet, dass der Verteilerkanal (21, 71) kreisrund mit einen sich nach und nach verjüngenden Querschnitt ist und den gesamten Strom des zu extrudierenden Kunststoffs in eine Richtung zu einem zentralen Laminierbereich (72) führt, der in einen Korrekturbereich (73) mündet, wo der zu extrudierende Kunststoff in Richtung Austrittsdüse (74) gelenkt wird.

2. Extruderkopf nach Anspruch 1, **dadurch gekennzeichnet, dass** er mindestens eine Vorrichtung zur Formung (13) des zu extrudierenden Werkstoffs aufweist, und dass diese Formgebungsvorrichtung von der Versorgungseinheit (14) unabhängig ist.

3. Extruderkopf nach Anspruch 1, **dadurch gekennzeichnet, dass** er mehrere identische Versorgungseinheiten (14, 15, 16) aufweist, die in Extrusionsrichtung von der Quelle aus stromabwärtig nebeneinander angeordnet sind.

4. Extruderkopf nach Anspruch 1, **dadurch gekennzeichnet, dass** jede Einheit von einem Körper gebildet wird, der sich aus zwei nebeneinander liegenden Platten (200) zusammensetzt, die den Zuführungskanal (110), den Verteilerkanal (71), den zentralen Laminierbereich (72), den Korrekturbereich (73) und die Austrittsdüse (74) durch Bearbeitung ihrer Innenseite definieren.

5. Extruderkopf nach Anspruch 1, **dadurch gekennzeichnet, dass** jede Einheit ein unabhängiges Heizelement (201) aufweist.

6. Extruderkopf nach Anspruch 2, **dadurch gekennzeichnet, dass** die Formgebungsvorrichtung (13) nach den Versorgungseinheiten (14, 15, 16) angeordnet ist.

7. Extruderkopf nach Anspruch 2, **dadurch gekennzeichnet, dass** die Formgebungsvorrichtung (13) mindestens ein Paar Formgebungsrollen (22, 22') aufweist, die auf einem Halter (23) angeordnet sind, der um eine zur Extrusionsrichtung kolineare Achse (25) dreht.

8. Extruderkopf nach Anspruch 7, **dadurch gekennzeichnet, dass** die Formgebungsrollen (22, 22') symmetrisch zur Extrusionsrichtung kolinearen Achse (25) angeordnet sind.

9. Extruderkopf nach Anspruch 7, **dadurch gekennzeichnet, dass** die Formgebungsrollen (22, 22') symmetrisch zu einer Achse (24) angeordnet sind, die zu der zur Extrusionsrichtung kolinearen Achse (25) senkrecht ist, und so konstruiert, dass sie um diese Achse (24) drehen.

10. Extruderkopf nach Anspruch 7, **dadurch gekennzeichnet, dass** die Rotationsbewegung der Rollen (22, 22') durch mindestens einen Motor erzeugt wird.

11. Extruderkopf nach Anspruch 7, **dadurch gekennzeichnet, dass** der Abstand zwischen den Rollen (22, 22') desselben Rollenpaars einstellbar ist.

## Claims

1. Extruder head for an extrusion line for synthetic material used for the manufacturing of elongated products such as electrical or optical cables, tubes, especially watering or similar kinds of tubes or tubular films. This extruder head has at least one module (14, 15, 16) which feeds the synthetic material to be extruded and the aforesaid module has an inlet channel (20, 70, 110) for this synthetic material to be extruded, a feeder channel (21, 71) and an outlet pipe (74), the characteristic features being the fact that the aforesaid inlet channel (20, 70, 110) for this synthetic material to be extruded leads tangentially into the aforesaid feeder channel (21, 71), the fact that the aforesaid feeder channel (21, 71) Is circular, with a gradually decreasing cross section and leads the whole of the flow of the aforesaid synthetic material to be extruded in a single direction towards the central calendering zone (72) which leads to a centring zone (73) which routes the aforesaid synthetic material to be extruded to the outlet pipe (74).

2. Extruder head as described in claim 1, with the characteristic features that it has at least one forming system (13) used for the material to be extruded and the fact this forming system is independent of the feeder module (14).

3. Extruder head as described in claim 1, with the characteristic feature that it has several identical feeder modules (14, 15, 16) which are juxtaposed from upstream to downstream in the direction of extrusion.

4. Extruder head as described in claim 1, with the characteristic feature that each module is made up of a unit which is itself made up of two juxtaposed plates (200) which define the inlet channel (110), the feeder channel (71), the central calendaring zone (72), the centring zone (73) and the outlet pipe (74) by means of machining work carried out on their inner side.

5. Extruder head as described in claim 1, with the characteristic feature that each module includes an independent heating element (201).

6. Extruder head as described in claim 2, with the characteristic feature that the forming system (13) is placed downstream of the feeder modules (14, 15,16).

7. Extruder head as described in claim 2, with the characteristic feature that the forming system (13) includes at least one pair of forming rollers (22, 22') placed onto a support (23) which pivots around a axle (25) which is collinear to the direction of extrusion.

8. Extruder head as described in claim 7, with the characteristic feature that the forming rollers (22, 22') are placed symmetrically to the axle (25) which is collinear to the direction of extrusion.

9. Extruder head as described in claim 7, with the characteristic feature that the forming rollers (22, 22') are symmetrical to a axle (24) which is perpendicular to the axle (25) which is collinear to the direction of extrusion and is laid out so as to pivot around this axle (24).

10. Extruder head as described in claim 7, with the characteristic feature that the rollers (22, 22') are made to rotate using at least one motor.

11. Extruder head as described in claim 7, with the characteristic feature that the distance between the rollers (22, 22') can be adjusted for a single pair of rollers.
